(19) **Europäisches Patentamt / European Patent Office / Office européen des brevets**

(11) **EP 3 340 435 A1**

(12) # EUROPEAN PATENT APPLICATION
published in accordance with Art. 153(4) EPC

(43) Date of publication:
**27.06.2018 Bulletin 2018/26**

(51) Int Cl.:
***H02K 1/18*** *(2006.01)*

(21) Application number: **16839220.7**

(86) International application number:
**PCT/JP2016/074294**

(22) Date of filing: **19.08.2016**

(87) International publication number:
**WO 2017/033873 (02.03.2017 Gazette 2017/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.08.2015 JP 2015163290**

(71) Applicant: **Yoshikawa Kogyo Co., Ltd.**
**Kitakyushu-shi, Fukuoka 805-8501 (JP)**

(72) Inventors:
• **ENOKIZONO, Masato**
**Usa-shi**
**Oita 879-0442 (JP)**

• **MORI, Yuji**
**Kitakyushu-shi**
**Fukuoka 805-8501 (JP)**
• **UEDA, Ryo**
**Kitakyushu-shi**
**Fukuoka 802-0021 (JP)**
• **HAYASHI, Katsuyuki**
**Kitakyushu-shi**
**Fukuoka 802-0021 (JP)**

(74) Representative: **Forstmeyer, Dietmar et al**
**BOETERS & LIECK**
**Oberanger 32**
**80331 München (DE)**

(54) **STATOR CORE AND MOTOR EQUIPPED WITH SAME**

(57)    Provided is a stator core formed by laminating electrical steel sheets to steadily curtail iron loss and a motor equipped with the stator core.

A stator core 10 formed by laminating electrical steel sheets 11 having a thickness of from 25 to 80 $\mu$m steadily curtails iron loss. A motor 20 including the stator core 10 formed by laminating electrical steel sheets 11 having a thickness of from 25 to 80 $\mu$m has a steadily improved efficiency.

Fig. 2

EP 3 340 435 A1

**Description**

TECHNICAL FIELD

The present invention relates to a stator core formed by laminating electrical steel sheets and a motor equipped with the same.

BACKGROUND ART

It is desired to improve efficiency of motors for saving energy and, for example, a technique for improving motor efficiency is disclosed in Patent Document 1. Patent Document 1 discloses a technique for reducing degradation of iron loss properties of a stator core formed by laminating electrical steel sheets by forming grooves in the back yokes of the electrical steel sheets.

More specifically, Patent Document 1 proposes a stator core to reduce the degradation of iron loss property resulting from the compression stress applied to the stator core when the stator core is fitted into the housing of a motor (electric motor), and a motor including such a stator core. The electrical steel sheets of the stator core have grooves formed on their back yokes to reduce degradation of iron loss property resulting from the compression stress. The stator core is formed by laminating and affixing electrical steel sheets 1 punched out in an annular shape. It is recited that the electrical steel sheets used for the motor core are preferably non-oriented magnetic sheets and preferably not more than 0.35 mm thick, taking into consideration that the motor is driven with a high frequency.

In Example 1, it is described that a 20 mm thick stator core was made by laminating non-oriented magnetic sheets having a thickness of 0.20 mm.

Further, there has been proposed a method of fixing an armature core into a motor housing wherein the armature core is formed by laminating silicon steel plates, each silicon steel plate having a plurality of projections extending from its outer periphery, each projection provided with an interlocking part, and by attaching the laminated sheets together by interlocking parts provided on the projections and wherein the outer circumferential parts of the projections of the armature core thus formed are fitted into the motor housing (for example, Patent Document 2).

The silicon steel plates used in the method of fixing an armature core disclosed in Patent Document 2 have projections on their outer periphery. Patent Document 2, however, has no description as to the sheet thickness of the silicon steel plates.

Non-Patent Document 1 recites that, unlike common motors, traction motors for hybrid electric vehicles (HEVs) and electric vehicles (EVs) for volume production are required to have high torque properties at start-up and for climbing a slope, high-speed rotation properties at driving at the highest speed as well as high efficiency in the frequently used driving range. Motor cores included in such motors have laminated structures of electrical steel sheets and, for popular motor cores, electrical steel sheets having a thickness of from 0.20 to 0.50 mm are used (for example, Non-Patent Document 1, Fig. 11).

Further, electrical steel sheets have been proposed as iron-based soft magnetic material. Such electrical steel sheets are materials processed with sophisticated metallurgical technique to reduce iron loss, which occurs in AC magnetic field, to the utmost. It is mentioned (for example, in Non-Patent Document 2) that the sheet thicknesses are primarily in the range from 0.23 to 0.35 mm in the case of grain oriented electrical steel sheets and from 0.20 to 0.65 mm in the case of non-oriented magnetic steel sheets. The applicant of the present invention presents the following Patent Documents as inventions known in literature related to the present invention.

PRIOR ART REFERENCES

PATENT DOCUMENTS

Patent Document 1: Japanese Laid-Open Patent Application Publication 2010-252463.
Patent Document 2: Japanese Laid-Open Patent Application Publication 4-325846.

NON-PATENT DOCUMENTS

Non-Patent Document 1: Takeaki Wakisaka, Satoshi Arai, and Yousuke Kurosaki, "Electrical Steel Sheet for Traction Motor of Hybrid/Electrical Vehicles," Nippon Steel Technical Report 393 (2012) (August 2012).
Non-Patent Document 2: "Soft Magnetic Materials of JFE Steel Group," JFE Technical Report No. 8, (June 2005): p.1-6.

## SUMMARY OF INVENTION

### PROBLEMS TO BE SOLVED BY THE INVENTION

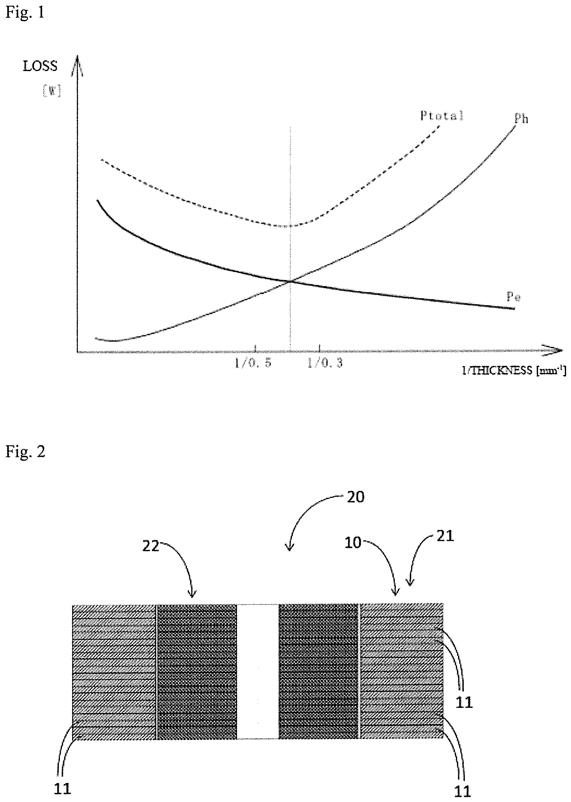

It was considered that iron loss in the stator core of a motor could be effectively curtailed by using electrical steel sheets having a thickness of from 0.3 to 0.5 mm to form the stator core. This is because, as can be seen in Fig. 1, iron loss (Ptotal) is a sum of eddy current loss (Pe) and hysteresis loss (Ph), and eddy current loss increases as the electrical steel sheet gets thicker while the effect of hysteresis loss gets greater as the electrical steel sheet gets thinner; thus, iron loss was deemed to be most effectively curtailed when electrical steel sheets have a thickness of from 0.3 to 0.5 mm.

Eddy current loss and hysteresis loss can be represented by:

$$Pe = Ke\,(t\,f\,Bm)^2 / \rho,$$

and

$$Ph = Kh\,f\,(Bm)^{1.6},$$

where Ke is a constant of proportionality, Kh is a constant of proportionality, t is thickness of electrical steel sheet, f is frequency, Bm is maximum magnetic flux density, and $\rho$ is resistivity.

Typical thin sheet materials include amorphous materials. However, amorphous materials are disadvantageous in that they have low saturation electromagnetic densities, easily degrade by processing, and are expensive to produce.

An object of the present invention, which has been made in view of these circumstances, is to provide a stator core formed by laminating electrical steel sheets to steadily curtail iron loss and a motor including the stator core.

### MEANS FOR SOLVING THE PROBLEMS

The inventors of the present invention have found, after an intense research, that it is possible to steadily curtail iron loss in a stator core by employing thinner electrical steel sheets for the stator core than conventional electrical steel sheets, thereby succeeded in completing the present invention. More specifically, the present invention includes the following technical matters.

(1) A stator core according to a first invention in line with the above-described object is formed by laminating electrical steel sheets having a thickness of from 25 to 80 $\mu$m. It was verified by examination that electrical steel sheets having a thickness of 80 $\mu$m or less curtail iron loss.

(2) A motor according to a second invention in line with the above-described object includes a stator core formed by laminating electrical steel sheets having a thickness of from 25 to 80 $\mu$m. It was verified by examination that a motor including electrical steel sheets having a thickness of 80 $\mu$m or less curtails iron loss and displays an excellent motor efficiency.

(3) The motor according to the second invention preferably revolves with a frequency of 500 Hz or higher. The motor according to the second invention displays an excellent motor efficiency with a frequency of 500 Hz or higher.

### ADVANTAGEOUS EFFECTS OF INVENTION

The stator core according to the first invention and the motor according to the second invention steadily curtail iron loss as the electrical steel sheets included therein have a thickness of from 25 to 80 $\mu$m.

### BRIEF DESCRIPTION OF THE DRAWINGS

[Fig. 1] Fig. 1 is a graph illustrating the relation between iron loss and electrical steel sheet thickness as considered conventionally.

[Fig. 2] Fig. 2 is a sectional side view illustrating a stator core and a motor according to an embodiment of the present invention.

[Fig. 3] Fig. 3 is a graph illustrating measurement results of iron loss of electrical steel sheets.

[Fig. 4] Fig. 4 is a graph illustrating measurement results of W/f of electrical steel sheets.

[Fig. 5] Fig. 5 is a graph illustrating the relation between iron loss and sheet thickness of electrical steel sheets.

[Fig. 6] Fig. 6 is a graph illustrating the relation between iron loss of a motor and frequency.

[Fig. 7] Fig. 7 is a graph illustrating measurement results of iron loss in examples and a comparative example.

[Fig. 8] Fig. 8 is a graph illustrating measurement results of motor efficiency in examples and a comparative example.

[Fig. 9] Fig. 9A is a plan view and Fig. 9B is a side view of a stator core, the stator core being an outer core.

## MODE FOR CARRYING OUT THE INVENTION

With reference to the attached drawings, embodiments of the present invention will be described so that the present invention will be better understood.

As illustrated in Fig. 2, a stator core 10 according to an embodiment of the present invention includes electrical steel sheets 11 and is formed by laminating a plurality of electrical steel sheets 11.

In other words, the stator core 10 according to an embodiment of the present invention is formed by laminating a plurality of stator core pieces made of electrical steel sheets. The stator core pieces are formed by punching out electrical steel sheets and the stator core pieces are "temporarily fixed" with each other to form a stator core piece group.

Herein, "temporarily fixed" means a preliminary process of temporarily fixing stator core pieces with each other to form stator core piece group before the stator core pieces of the stator core piece group are "fully fixed" with each other with hardening resin as described later.

The stator core pieces are laminated to form a stator core piece group by the "temporary fixing". To fix the stator core pieces of the stator core piece group with each other, hardening resin is applied prior to curing between the stator core pieces. By curing the hardening resin by heat or the like, the stator core pieces are "fully fixed" with each other by adhesion by the hardening resin.

In the present embodiment the plurality of stator core pieces, punched out from electrical steel sheets 11, are "temporarily fixed" with each other by "interlocking" but the stator core pieces may be temporarily fixed by other means such as, for example, by "adhesion" by hardening resin.

The stator core 10 according to an embodiment of the present invention is produced by employing both the "temporary fixing" for obtaining a stator core piece group formed by laminating a plurality of stator core pieces punched out of electrical steel sheets 11 and the "full fixing" of the stator core pieces of the stator core piece group with each other by adhesion by hardening resin (complex lamination).

The electrical steel sheets 11 used for the stator core 10 according to the present invention are much thinner than the electrical steel sheets having a thickness of more than 200 $\mu$m used for conventional stator core and, when only either one of "interlocking" or "adhesive" is used, it is usually difficult to ensure sufficient peel strength between the electrical steel sheets 11.

However, the stator core 10 according to the present invention is produced by a production method employing both the "temporary fixing" for obtaining a stator core piece group formed by laminating a plurality of stator core pieces punched out of electrical steel sheets 11 and the "full fixing" of the stator core pieces of the stator core piece group with each other by adhesion by hardening resin. This allows the stator core 10 according to the present invention to include electrical steel sheets 11 having a thickness of from 25 to 80 $\mu$m, which was difficult to produce by conventional techniques.

In other words, the stator core 10 according to the present invention, which includes electrical steel sheets 11 having a thickness of from 25 to 80 $\mu$m is produced by employing both the "temporary fixing" by "interlocking" for obtaining a stator core piece group formed by laminating a plurality of stator core pieces punched out of electrical steel sheets 11 and the "full fixing" by adhesion using adhesive. The electrical steel sheets 11 according to the present embodiment are produced by cold rolling.

The stator core 10 according to the present invention may be an inner core or an outer core. For the full fixing of an inner core piece group or an outer core piece group, the hardening resin prior to curing need not be applied all over the outer peripheral region or the inner peripheral region but may be applied to a part of the outer peripheral region or the inner peripheral region. In other words, the inner core piece group and the outer core piece group may have a region in which no hardening resin is applied.

According to the present invention, the stator core 10 includes electrical steel sheets 11 having a thickness of from 25 to 80 $\mu$m. This range of the sheet thickness has been selected to curtail eddy current loss by providing the stator core 10 with electrical steel sheets 11 thinner than the electrical steel sheets used for the conventional stator cores. Further, it has been verified by earnest examination that, according to the present invention, the stator core 10 including electrical steel sheets 11 having a thickness of 80 $\mu$m or less greatly curtails the hysteresis loss increase to much lower values than previously expected.

The results of verification will be described below.

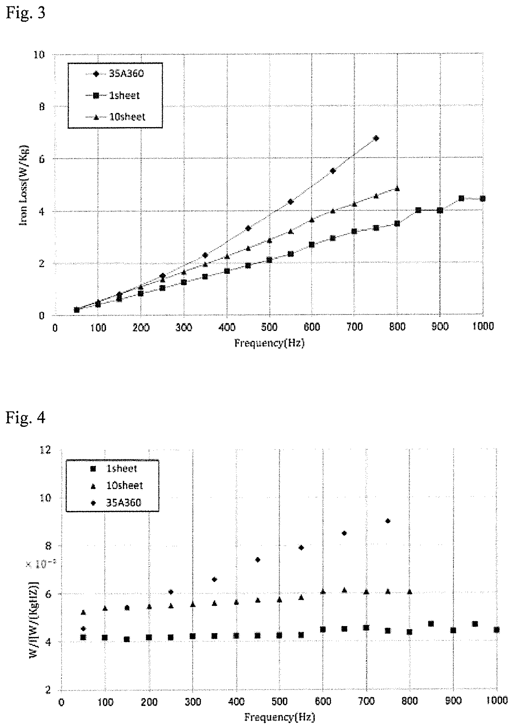

Fig. 3 is a graph illustrating the results of measurement of iron loss in a 50 μm thick electrical steel sheet and a 350 μm thick electrical steel sheet. In the graph in Fig. 3, the vertical axis represents iron loss and the horizontal axis represents frequency (frequency for driving the rotor of a motor that includes a stator core made of each type of electrical steel sheets). Iron loss was measured in magnetic measurement test on the electrical steel sheets using a vector magnetic property measuring device (V-H Analyzer) developed by one of the inventors of the present invention. "1 sheet", "10 sheet", and "35A360" respectively represent one electrical steel sheet having a thickness of 50 μm (also referred to as "sample 1" hereinafter), a lamination of ten electrical steel sheets each having a thickness of 50 μm (also referred to as "sample 2" hereinafter), and one electrical steel sheet having a thickness of 350 μm (also referred to as "sample 3" hereinafter).

As can be seen in the graph in Fig. 3, it was confirmed that the rates of increase in iron loss relating to frequency increase are larger in the order of sample 3, sample 2, and sample 1.

Fig. 4 illustrates the relations between W/f and frequency for the same three samples, W/f being iron loss divided by frequency. As can be seen in Fig. 4, the slope of increase in W/f of sample 3 in relation to frequency increase was larger than those of samples 1 and 2 due to the effects of eddy current loss, which is part of iron loss, since eddy current loss increases in proportion to the square of the sheet thickness.

Table 1 lists the measurement results of iron loss at 750 Hz and the relations between W/f and frequency, W/f being iron loss divided by the frequency (750Hz).

[Table 1]

| Relation between Frequency (750 Hz) and Iron Loss (Figs. 3 and 4) | | | | |
|---|---|---|---|---|
| Examples/ Comparative Example | Sheet Thickness of Electrical Steel Sheet (μm) | Number of Laminated Sheets (sheets) | Iron Loss (W/Kg) | Iron Loss/Frequency (W/Kg)/(Hz) x $10^{-3}$ |
| Sample 1 (Example) | 50 | 1 | 3.4 | 4.3 |
| Sample 2 (Example) | 50 | 10 | 4.5 | 6.2 |
| Sample 3 (Comparative Example) | 350 | 1 | 7.1 | 9.1 |

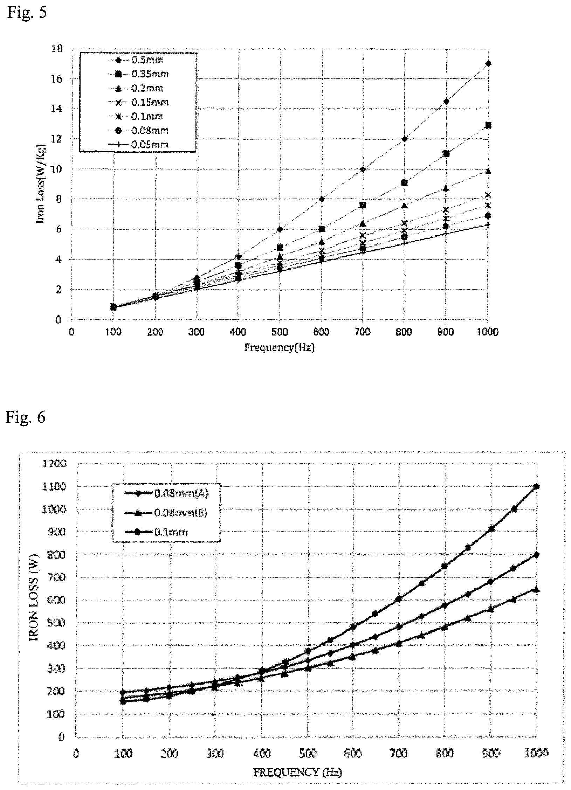

A simulation was conducted for the relation between the thickness of the electrical steel sheet according to the present embodiment (produced by cold rolling) and iron loss when the electrical steel sheets are used for a stator core. The graph in Fig. 5 illustrates the result of simulation.

As can be seen in the graph in Fig. 5, it was found that as the frequency increased, the thinner the electrical steel sheet was, the smaller the slope of increase in iron loss was, that the iron loss in electrical steel sheets having a thickness of 80 μm or less increased almost linearly as the frequency increased (from 100 Hz), and that electrical steel sheets having a thickness of 100 μm or more had greater rates of increase in iron loss as the frequency increased. Thus, it was found by the simulation that electrical steel sheets having a thickness of 80 μm or less would steadily curtail iron loss at the frequency range of 100 Hz or more. From the graph in Fig. 5, it was found that the rate of increase in iron loss in relation to frequency was 0.006 (W/Kg · Hz) for the electrical steel sheet having a thickness of 80 μm and 0.005 (W/Kg · Hz) for the electrical steel sheet having a thickness of 50 μm.

In view of the graphs in Figs. 3, 4, and 5, it is possible that, in the electrical steel sheets having a thickness of 80 μm or less, the effect of hysteresis loss is smaller than conventionally thought.

Due to technical difficulties and the like in the production process of electrical steel sheets or the lamination process of electrical steel sheets, there is a lower limit in the thickness of the electrical steel sheets to be included in a stator core that can be commercially manufactured in practice and, in the present embodiment, the lower limit is set at 25 μm. From the viewpoint of producing a stator core by laminating stator core pieces made of electrical steel sheets, the thickness of the electrical steel sheets may be 60 to 80 μm.

A motor 20 according to an embodiment of the present invention includes, as illustrated in Fig. 2, a stator 21 produced by conducting a wire-winding processing on the stator core 10 and a rotor 22 provided inside the stator 21 . In other words, the motor 20 includes the stator core 10.

It was found that a motor 20 that includes a stator core 10 formed by laminating electrical steel sheets 11 (i.e., electrical steel sheets having a thickness of from 25 to 80 μm) more steadily curtailed increase in iron loss as the rate of rotation increased than a motor including a stator core formed by laminating electrical steel sheets having a thickness of more than 80 $\mu$m.

Electrical steel sheets are processed differently in the production process depending on the thickness of electrical steel sheets and, needless to say, motors including electrical steel sheets have different values of actual iron loss depending on how the electrical steel sheets are processed in the production process. Further, there have been conventionally no commercially distributed electrical steel sheets having a thickness of from 60 to 80 $\mu$m for a stator core, furthermore, there has been no industrial technique for laminating electrical steel sheets having a thickness of 80 $\mu$m or less and, still further, there has been no attempt in the industry to use electrical steel sheets having a thickness of from 25 to 80 $\mu$m for a stator core because of the relation between iron loss and thickness of an electrical steel sheet as seen in Fig. 1.

The inventors of the present invention have succeeded in laminating very thin electrical steel sheets having a thickness of 80 $\mu$m or less (laminating the electrical steel sheets in such a manner as to ensure excellent performance of the stator core) and also succeeded in measuring the extent of iron loss by using a stator core actually formed by laminating electrical steel sheets having a thickness of 80 $\mu$m. Fig. 6 illustrates the results of the measurement.

In Fig. 6, graphs denoted by 0.08 mm (A) and 0.08 mm (B) correspond to motors including stator cores formed of electrical steel sheets having a thickness of 80 $\mu$m but the electrical steel sheets in these motors are processed differently in their production processes.

Further, in Fig. 6, 0.08 mm (A) and 0.08 mm (B) represent material property variation due to production variation in sheets having a thickness of 80 $\mu$m.

The graph denoted by 0.1 mm corresponds to a motor including a stator core formed of electrical steel sheets having a thickness of 100 $\mu$m.

As can be seen in Fig. 6, it was found that the motors including stator cores formed by laminating electrical steel sheets having a thickness of 80 $\mu$m had a steadily lower iron loss than the motor including a stator core formed by laminating electrical steel sheets having a thickness of 100 $\mu$m in the frequency range over 500 Hz even when the electrical steel sheets had been processed differently in the production processes.

The iron loss in the electrical steel sheets having a thickness of 80 $\mu$m or less did not increase presumably because the skin depth (the depth beyond which an opposing magnetic field is produced by eddy currents) of the eddy current in the electrical steel sheets was 80 $\mu$m.

Further, it can be seen in Fig. 6 that the motors including stator cores formed of electrical steel sheets having a thickness of 80 $\mu$m displayed a remarkable effect of curtailing iron loss when the motors were driven with a frequency of 500 Hz or more.

At present, the maximum requirement for the rate of rotation of a motor is generally considered to be 100,000 rpm (corresponding to 10,000 Hz in frequency).

When eddy currents are produced in an electrical steel sheet, an opposing magnetic field that opposes the magnetic field applied to the electrical steel sheet (hereinafter referred to also as the "applied magnetic field ") is produced in the electrical steel sheet. Therefore, when eddy currents are produced in the electrical steel sheet, a greater applied magnetic field is required to provide a certain magnitude of magnetic flux density in the electrical steel sheet than when no opposing magnetic field is produced in the electrical steel sheet. Thus, curtailing eddy currents by the use of thin electrical steel sheets reduces the opposing magnetic field, which presumably enables a reduction of the excitation current supplied to a motor.

In other words, the reduction of the excitation current supplied to the motor is made possible by using electrical steel sheets having a thickness of from 25 to 80 $\mu$m for forming the stator core included in the motor and by employing both the "temporarily fixing" for obtaining a stator core piece group formed by laminating a plurality of stator core pieces made of electrical steel sheets and the "full fixing" of the stator core pieces of the stator core piece group with each other.

A demagnetizing field is produced in a motor due to the absence of a closed magnetic circuit and, with decreasing thickness of the electrical steel sheet, the demagnetizing factor in the thickness direction of the electrical steel sheet increases and the demagnetizing field relatively decreases in the in-plane direction of the electrical steel sheet (the direction perpendicular to the thickness direction of the electrical steel sheet). Therefore, a motor with a stator core formed of thin electrical steel sheets has a relatively smaller demagnetizing field in the in-plane direction of the electrical steel sheets than the demagnetizing field in the thickness direction of the stator core, which also presumably enables a reduction of the excitation current supplied to the motor.

EXAMPLES

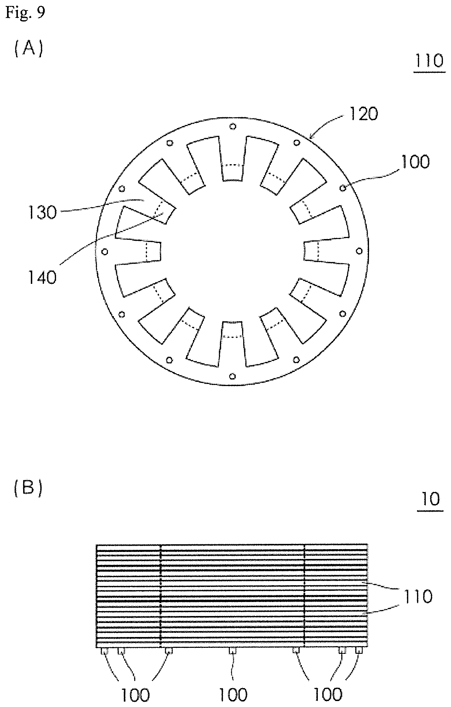

Examples of carrying out the present invention for ascertaining its advantageous effects will now be described. In each example, a plurality of stator core pieces punched out of electrical steel sheets having a certain thickness were temporarily fixed by "interlocking" to form a stator core piece group. The stator core pieces of the stator core piece group were "fully fixed" with each other using hardening resin to produce a stator core. As illustrated in Fig. 9, the stator cores in the examples were outer cores.

Each outer core piece was provided with "interlocking" parts. Twelve interlocking parts were provided on the annular base portion of each outer core piece, which is not the portion extending to form the teeth. A plurality of outer core pieces were laminated by interlocking to form an outer core piece group and then hardening resin prior to curing was applied to the inner peripheral region of the outer core piece group. The hardening resin used was an epoxy resin.

The motor assembled in Example 1 included a stator core (outer core) formed of 800 laminated stator core pieces (outer core pieces) made of electrical steel sheets having a thickness of 50 μm. The motor assembled in Example 2 included a stator core (outer core) formed of 500 laminated stator core pieces (outer core pieces) made of electrical steel sheets having a thickness of 80 μm.

The motor assembled in the Comparative Example included a stator core (outer core) formed of laminating a plurality of stator core pieces (outer core pieces) made of electrical steel sheets having a thickness of 350 μm.

The stator core (outer core) included in the motor assembled in Example 1 was φ182 and 40 mm in thickness.

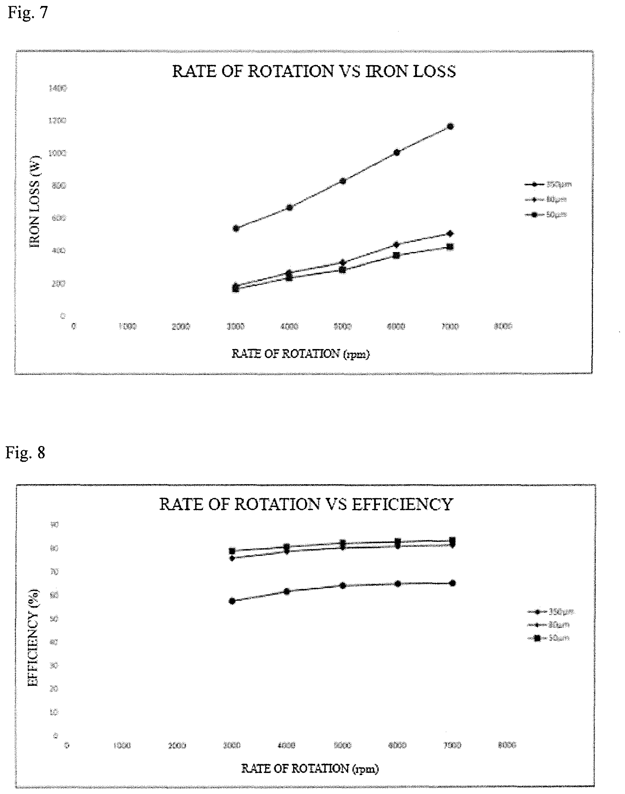

Iron loss and motor efficiency were measured for a motor including a stator core formed by laminating electrical steel sheets having a thickness of 50 μm (Example 1), for a motor including a stator core formed by laminating electrical steel sheets having a thickness of 80 μm (Example 2), and for a motor including a stator core formed by laminating electrical steel sheets having a thickness of 350 μm (Comparative Example). Fig. 7 and Fig. 8 illustrate the results of measurement of the iron loss and the results of measurement of the motor efficiency, respectively. Table 2 and Table 3 also list the results of measurement of the iron loss and the results of measurement of the motor efficiency, respectively. Motor efficiency is motor output divided by input electric power multiplied by 100. In Fig. 7 and Fig. 8, graphs denoted by "50 μm" and "80 μm" correspond to Example 1 and Example 2, respectively, and the graph denoted by "350 μm" corresponds to the Comparative Example. The motors for the Examples and the Comparative Example included a 12-pole, 6-phase stator core (Fig. 9).

[Table 2]

| Relation between Rate of Rotation (rpm) and Iron Loss (W) of the Motor including a Stator Core according to the Present Invention | | | | | |
|---|---|---|---|---|---|
| Examples /Comparative Example | Rate of Rotation of Motor | | | | |
| | 3000 rpm | 4000 rpm | 5000 rpm | 6000 rpm | 7000 rpm |
| Example 1 Iron Loss (W) Sheet Thickness of Electrical Steel Sheet: 50 μm (1 sheet) | 180 W | 240 W | 300 W | 380 W | 410 W |
| Example 2 Iron Loss (W) Sheet Thickness of Electrical Steel Sheet: 80 μm (1 sheet) | 190 W | 280 W | 370 W | 440 W | 520 W |
| Comparative Example Iron Loss (W) Sheet Thickness of Electrical Steel Sheet: 350 μm (1 sheet) | 570 W | 640 W | 820 W | 1000 W | 1180 W |

[Table 3]

| Relation between Rate of Rotation (rpm) and Motor Efficiency (%) of the Motor including a Stator Core according to the Present Invention | | | | | |
|---|---|---|---|---|---|
| Examples /Comparative Example | Rate of Rotation of Motor | | | | |
| | 3000 rpm | 4000 rpm | 5000 rpm | 6000 rpm | 7000 rpm |
| Example 1 Motor Efficiency Sheet Thickness of Electrical Steel Sheet: 50 μm (1 sheet) | 79 | 80 | 82 | 83 | 83 |
| Example 2 Motor Efficiency Sheet Thickness of Electrical Steel Sheet: 80 μm (1 sheet) | 78 | 78 | 80 | 81 | 81 |
| Comparative Example Motor Efficiency Sheet Thickness of Electrical Steel Sheet: 350 μm (1 sheet) | 57 | 62 | 64 | 66 | 66 |

It can be seen in the graph in Fig. 7 that, as the rate of rotation increases, the differences between the iron losses in the Examples and the iron loss in the Comparative Example expand in the range of 3000 to 7000 rpm (which corresponds to 300 to 700 Hz).

It can be seen in the graph in Fig. 8 that the motor efficiencies of the Examples are higher than the motor efficiency of the Comparative Example in the range of 3000 to 7000 rpm.

Although examples of carrying out the present invention have been described above, the present invention is not limited to the above-described embodiments and any alterations of conditions and the like without departing from the spirit of the present invention are within the range of application of the present invention.

INDUSTRIAL APPLICABILITY

The stator core and the motor according to the present invention steadily curtail iron loss. Hence the application of the present invention is expected in products that require a motor with high efficiency, such as transformers, generators, and motors as well as in power generation facilities. As iron loss can be steadily curtailed by the present invention, the present invention can be applied in the electric equipment industry. Further, the present invention can be suitably applied to the traction motors of mass-production hybrid electric vehicles (HEVs) and electric vehicles (EVs); therefore, the present invention can be utilized in the automobile industry.

REFERENCE SIGNS LIST

10: stator core, 11 electrical steel sheet, 20: motor, 21: stator, 22: rotor, 100: interlocking, 110: outer core piece, 120: annular base, 130: teeth, 140: magnetic pole part.

**Claims**

1. A stator core formed by laminating electrical steel sheets having a thickness of from 25 to 80 $\mu$m.

2. A motor comprising a stator core formed by laminating electrical steel sheets having a thickness of from 25 to 80 $\mu$m.

3. The motor according to claim 2, wherein the motor revolves with a frequency of 500 Hz or higher.

**Amended claims under Art. 19.1 PCT**

1. (amended) A stator core formed by laminating electrical steel sheets having a thickness of from 60 to 80 $\mu$m.

2. (amended) A motor comprising a stator core formed by laminating electrical steel sheets having a thickness of from 60 to 80 $\mu$m.

3. The motor according to claim 2, wherein the motor revolves with a frequency of 500 Hz or higher.

**Statement under Art. 19.1 PCT**

Claim 1 of the present application, which reads before amendment, "A stator core formed by laminating electrical steel sheets having a thickness of from 25 to 80 $\mu$m." has been amended to read "A stator core formed by laminating electrical steel sheets having a thickness of from 60 to 80 $\mu$m." (amended part underlined) to clarify that the lower limit of the sheet thickness of the stator core is 60 $\mu$m.

Claim 2 of the present application, which reads before amendment, "A motor comprising a stator core formed by laminating electrical steel sheets having a thickness of from 25 to 80 $\mu$m." has been amended to read "A motor comprising a stator core formed by laminating electrical steel sheets having a thickness of from 60 to 80 $\mu$m." (amended part underlined) to clarify that the lower limit of the sheet thickness of the steel sheets that the motor comprises is 60 $\mu$m.

Document 1 cited in the International Search Report, JP2011-250585A recites a stator of an axial gap motor having small stator cores formed by winding a ribbon of amorphous electrical steel sheet in a plurality of layers.

Claim 2 of Document 1 recites that the ribbon of amorphous electrical steel sheet has a thickness of from 0.01 to 0.04 mm (10 to 40 $\mu$m) and Claim 2 of the same document recites that the amorphous electrical steel sheet has a thickness of 0.25 mm (25 $\mu$m).

Document 1 recites that a ribbon of amorphous electrical steel sheet is wound in the stator of an axial gap motor but it does not recite that amorphous electrical steel sheets are laminated.

Although claims 1 and 2 of the present application simply refer to "electrical steel sheets", it is a common technical knowledge in the industry that, when "electrical steel sheet" is simply referred to as such, it means "polycrystal electrical steel sheet" not "amorphous electrical steel tape". This is also evident from the fact that no "amorphous electrical steel tape" having a thickness of 60 $\mu$m or more exits.

Therefore, the electrical steel sheets having a thickness of 60 $\mu$m recited in amended claims 1 and 2 are not "amorphous electrical steel tapes" but "polycrystal electrical steel sheets".

Accordingly, the stator core in the claims of the present application greatly differs from the stator of an axial gap motor recited in Document 1 in (a) the type of steel sheets and (b) the thickness of steel sheets. In addition, Document 1 does not recite (c) a core formed by laminating electrical steel sheets.

Further, Documents 2 to 6 cited in the International Search Report do not recite electrical steel sheets having a thickness of from 60 to 80 $\mu$m. Further, the electrical steel sheets recited in Documents 3 and 4 are not polycrystal electrical steel sheets.

The present invention has achieved advantageous effects of curtailing iron loss and displaying an excellent motor efficiency by employing thinner electrical steel sheets for the stator core than the conventional electrical steel sheets.

Fig. 1

Fig. 2

Fig. 3

Fig. 4

Fig. 5

Fig. 6

Fig. 7

RATE OF ROTATION VS IRON LOSS

Fig. 8

RATE OF ROTATION VS EFFICIENCY

Fig. 9

(A)

<u>110</u>

120
100
130
140

(B)

<u>10</u>

110

100   100   100

EP 3 340 435 A1

**INTERNATIONAL SEARCH REPORT**

International application No.

PCT/JP2016/074294

A. CLASSIFICATION OF SUBJECT MATTER
*H02K1/18(2006.01)i*

According to International Patent Classification (IPC) or to both national classification and IPC

B. FIELDS SEARCHED

Minimum documentation searched (classification system followed by classification symbols)
H02K1/18

Documentation searched other than minimum documentation to the extent that such documents are included in the fields searched
Jitsuyo Shinan Koho        1922–1996    Jitsuyo Shinan Toroku Koho    1996–2016
Kokai Jitsuyo Shinan Koho    1971–2016    Toroku Jitsuyo Shinan Koho    1994–2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2011-250585 A  (Hitachi Appliances, Inc.), 08 December 2011 (08.12.2011), claims 1 to 3 (Family: none) | 1-3 |
| Y | JP 2005-151648 A  (Daikin Industries, Ltd.), 09 June 2005 (09.06.2005), claim 1; paragraphs [0039] to [0040]; fig. 1, 2 (Family: none) | 1-3 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 September 2016 (15.09.16) | 27 September 2016 (27.09.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**15**

**INTERNATIONAL SEARCH REPORT**

International application No.

PCT/JP2016/074294

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 2011-91933 A  (Hitachi Industrial Equipment System Co., Ltd.), 06 May 2011 (06.05.2011), claim 1; paragraphs [0032], [0067] to [0071]; fig. 11 & US 2011/0095628 A1 claim 1; paragraphs [0058], [0093] to [0097]; fig. 11A to 11D & CN 102044917 A | 1-3 |
| Y | JP 61-12004 A  (Mitsui Petrochemical Industries, Ltd.), 20 January 1986 (20.01.1986), entire text; all drawings (Family: none) | 1-3 |
| Y | JP 2007-221869 A  (Hitachi Metals, Ltd.), 30 August 2007 (30.08.2007), claim 1; paragraphs [0005], [0018] to [0023] (Family: none) | 1-3 |
| Y | JP 2004-48859 A  (Mitsui Chemicals, Inc.), 12 February 2004 (12.02.2004), claims 1 to 4; paragraphs [0004], [0034] (Family: none) | 1-3 |
| A | JP 60-16159 A  (Mitsubishi Electric Corp.), 26 January 1985 (26.01.1985), claim 1 (Family: none) | 1-3 |
| A | WO 2014/184859 A1  (Hitachi, Ltd.), 20 November 2014 (20.11.2014), claim 10 (Family: none) | 1-3 |
| P,A | JP 2016-25317 A  (Mitsui High-Tec Inc.), 08 February 2016 (08.02.2016), claims 1 to 5; paragraphs [0005], [0030] & US 2016/0023447 A1 claims 1 to 5; paragraphs [0012], [0066] to [0067] | 1-3 |

Form PCT/ISA/210 (continuation of second sheet) (January 2015)

**EP 3 340 435 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010252463 A

- JP 4325846 A

**Non-patent literature cited in the description**

- **TAKEAKI WAKISAKA ; SATOSHI ARAI ; YOUSU-KE KUROSAKI.** Electrical Steel Sheet for Traction Motor of Hybrid/Electrical Vehicles. *Nippon Steel Technical Report 393,* August 2012

- Soft Magnetic Materials of JFE Steel Group. *JFE Technical Report,* June 2005, 1-6